# EUROPEAN PATENT APPLICATION

(11) **EP 2 241 980 A1**
(43) Date of publication of application: **20.10.2010**
(21) Application number: 10160286.0
(22) Date of filing: 19.04.2010
(51) Int. Cl.: G06F 13/40, G05B 19/05

(54) **Modular I/O System with Automated Commissioning**

(30) Priority: 17.04.2009 US 212976 P; 04.12.2009 US 631352
(71) Applicant: Schneider Electric Buildings AB, 213 75 Malmö (SE)
(72) Inventor: Burton, Lambert, Wakefield, MA MA 01880 (US); Nohelty, Thomas, Chelmsford, MA MA 01824 (US); Berube, Michael, Salem, NH NH 03079 (US); Nilsson, Per, 24735, Sodra Sandby (SE)
(74) Representative: Simons, Alison

(57) **Abstract**

A modular input / output apparatus has a power supply unit, a central processing unit, and at least a pair of input / output module units. Each input / output unit has a base and an input / output module. The base includes a backplane printed circuit board having an input / output module interface. The base has a pair of connectors connected to the printed circuit board and capable of connecting to other units. The base has a field connection terminal block for connecting to external sensors and controls. The input / output module includes a circuit for interfacing with external sensors and controls and the CPU unit. The modular input / output apparatus allows installation and removal of input / output modules of one of the input / output module units without affecting other input / output modules. The apparatus can have multiple power supply units for powering the I/O modules.

## Description

### CROSS-REFERENCE TO RELATED APPLICATIONS

The present application claims the benefit of Provisional Patent Application No. 61/212,976 filed April 17, 2009, which is incorporated herein by reference.

### FIELD OF THE INVENTION

The present invention relates to a modular input/output system for field wiring in which individual input/output modules are automatically commissioned.

### BACKGROUND OF THE INVENTION

Electronic control and monitoring systems such as process control systems require communication with devices located in varying environments, such as manufacturing plants and office buildings. This includes receiving inputs such as commands and process conditions provided by various sensors and generating outputs. This interaction is provided by input/output ("I/O") systems. The signals that pass through an I/O system can be analog and/or digital in nature. Typically, the I/O system includes signal processing circuitry, which, for example, can provide filtering, amplification, or attenuation; analog to digital conversation for inputs; and other signal conditioning.

In addition, most process control systems, including building automation and security systems, include a central controller such as a central processing unit that receives the inputs from the sensors and provides outputs to actuators for controlling operational activities such as door access and air conditioning. The outputs provided to the actuators are determined in accordance with a control program that is continuously executed by the controller and that utilizes the information from the input sensors in setting appropriate control signal outputs. Inputs from and outputs to groups of sensors and actuators may be accomplished through wires or over local area networks.

One conventional system is designed to allow different types of modular I/O units to be quickly and conveniently installed and replaced to allow the systems to be rapidly and easily configured and reconfigured. This conventional I/O system has base units that are connected together by a serial bus with individual select lines. Plug-in I/O modules can be installed into the base units.

Unfortunately, there are deficiencies in conventional input / output systems. For example, the number of input / output (I/O) units is extremely limited.

### SUMMARY

In contrast to the above-described conventional systems, the present system has input / output (I/O) module units that each have a base and a removable module unit wherein the I/O module of the I/O module unit can be removed without effecting units farther away from the power and the controller. Furthermore, the system is configured to have I/O units communicate such that when a module of the I/O unit is plugged into a base, the module reads the address from the base and is instantly ready for the CPU unit to "discover" the I/O unit. In addition, the present system can have multiple power supply units for powering the I/O modules.

In an embodiment of a modular input / output system, the system has a power supply unit, a central processing unit (CPU) unit, and at least a pair of input / output units. Each input / output unit has a base and an input / output module. The base includes a backplane printed circuit board having an input / output module interface. An addressing circuit is carried by the printed circuit board for incrementing the address. The base has a pair of connectors connected to the printed circuit board and capable of connecting to other units. The base unit has at least one field connection terminal block for connecting to external sensors and controls. The input / output module includes a circuit for interfacing with external sensors and controls and the CPU unit. The module has an interface for engaging the input / output module interface on the base. The modular input / output system allows the installation and removal of an input / output module unit of one of the input / output units without affecting other input / output units.

In an embodiment, the power supply unit and the CPU unit each have a base and a module. The base for the CPU unit and the input / output units are configured identically.

In an embodiment, the connectors have a plurality of leads including a pair of power leads, a pair of differential communications bus leads, and a plurality of address leads.

In an embodiment, one of the power leads powers the backplane printed circuit board on the base and the other of the power leads powers the circuit on the module.

In an embodiment, there is at least a pair of power supply units. The power lead for powering the backplane printed circuit board extends continuously. The power lead for powering the modules terminates at the adjoining power supply unit.

In an embodiment, the base has a channel configured to be accepted by a rail. The base has a detent mechanism for engaging the rail for securing the base to the rail.

In an embodiment, the addressing circuitry includes an adder circuit.

In an embodiment, the addressing circuitry includes a 5 bit adder circuit.

In an embodiment, the field connection terminal block is electrically connected to the backplane printed circuit board through the circuit on the input / output module for interfacing with external sensors and controls and the CPU unit.

A method of communicating between a CPU module and at least one I/O module. At least one base of an input / output unit is connected to the CPU module and power supply module. The address of a specific base is set by incrementing the address from an adjacent base. An input / output module is connected to at least one of the bases of an input / output unit. The address of the base is read by the connected input / output module. The CPU module recognizes the address of the input / output module wherein the CPU unit discovers the number and type of I/O modules that are installed into the system as an I/O module is plugged into the base of the input / output units. The CPU communicates with the desired I/O module by including the address of the input / output module which is recognized by the addressed I/O module.

In a method, the setting of the address is done by a 5 bit adder circuit carried by a printed circuit board on the base of each of the input / output modules. In a method, the communications bus is differential and self-clocking (asynchronous).

In a method, packets of data are sent over the communications bus. Each packet is provided with address information in the packet header. The address header data of every packet is received by every I/O module installed on the network. The information is processed by only the addressed I/O module.

In an embodiment, the addressed I/O module will respond to the CPU module. The I/O modules that are not at the address specified in the packet header will ignore the remaining packet bytes.

In an embodiment of an input / output unit, the unit includes a base and an input / output module. The base includes a backplane printed circuit board having an input / output module interface. An addressing circuit is carried by the printed circuit board for incrementing the addresses. A pair of connectors in the base connects the printed circuit board and are for connecting to other units. A field connection terminal block is for connecting to external sensors and controls. The input / output module includes a circuit for interfacing with external sensors and controls and the CPU unit. The module has an interface for engaging the input / output module interface on the base. The modular input / output system allows installation and removal of input / output module units of one of the input / output units without affecting other input / output units.

In an embodiment of a modular input / output system, the system includes at least a pair of power supply units. Each unit has a pair of connectors. A CPU unit has a pair of connectors. The CPU is connected to one of the power supply units. The system has at least a pair of input / output units. Each input / output unit has a base and an input / output module. The base includes a backplane printed circuit board having an input / output module interface and a pair of connectors connected to the printed circuit board and for connecting to other units. The base includes at least one field connection terminal block for connecting to external sensors and controls. The input / output module includes a circuit for interfacing with external sensors and controls and the CPU unit and an interface for engaging the input / output module interface on the base. The connectors each have a plurality of leads including a pair of power leads, a pair of differential communications bus leads, and a plurality of address leads. One of the power leads powers the backplane printed circuit board on the base and the other of the power leads powers the circuit on the module. The modular input / output system allows installation and removal of input / output modules of one of the input / output units without effecting other input / output units.

In an embodiment, the system has at least a pair of power supply units. The power lead for powering the backplane printed circuit board extends continuously. The power lead for powering the modules terminates at the adjoining power supply unit.

In an embodiment, the base of each of the input / output units further comprises an addressing circuit carried by the printed circuit board for incrementing the addresses.

These aspects of the invention are not meant to be exclusive and other features, aspects, and advantages of the present invention will be readily apparent to those of ordinary skill in the art when read in conjunction with the following description, appended claims and accompanying drawings.

### BRIEF DESCRIPTION OF THE DRAWINGS

A full understanding of the invention can be gained from the following description of its preferred embodiments when read in conjunction with the accompanying drawing in which:

FIG. 1 is a perspective view of an embodiment of a modular input / output (I/O) system according to the invention;

FIG. 2 is a block diagram of the modular I/O system showing the addressing scheme;

FIG. 3 is a perspective view of three base units of the modular I/O system;

FIG. 4 is an "exploded" diagram of an I/O block unit of the present invention; and

FIGS. 5A and 5B is a block diagram of an alternative embodiment of the modular I/O system.

### PREFERRED EMBODIMENTS OF THE INVENTION

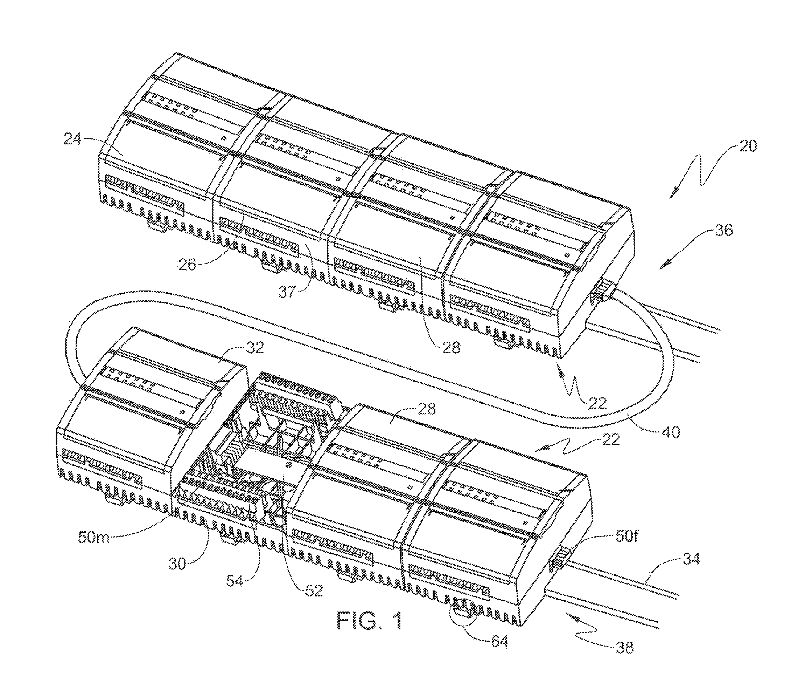

Referring to FIG. 1, a perspective view of an embodiment of a modular input / output (I/O) system 20 is shown. The system 20 has a series of units 22. These units 22 take several forms including a power supply unit 24, a central processing unit (CPU) unit 26, and a plurality of input / output (I/O) module units 28.

Each of the units 22 has a base 30 and a module 32 that interfaces with the base 30. The units 22 can came in various sizes, such as a 1X, 2X, and 3X size modules. The 1X is the smallest size module while the 2X and 3X modules are roughly twice and three times the width respectively. In the embodiment shown in FIG. 1, the power supply unit 24, the central processing unit (CPU) unit 26, and the plurality of input / output (I/O) module units 28 are the same size and are the smallest size module. While the letter "X" has been used in this example to connote a base size or a multiplication factor, it is recognized that other nomenclatures can be used such as 1W, 2W, and 3W.

The backplane boards for each of the different size base units are identical in electrical function but the PCB is made to the appropriate size for the respective base unit. The base 30 is identical in configuration for both the CPU unit 26 and the I/O module units. The base 30 for the power supply unit 24 is configured differently as explained below.

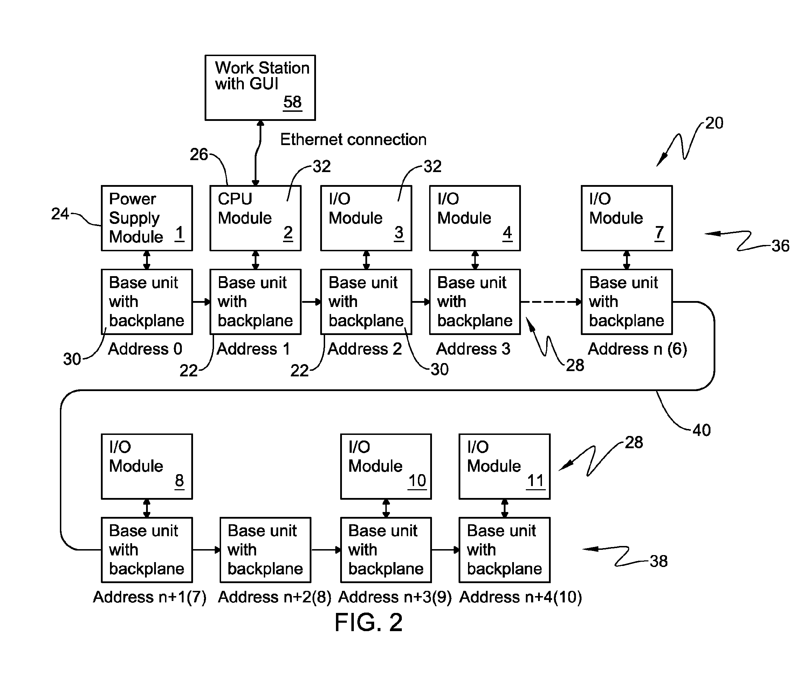

While the base 30 is identical for each I/O module unit 28 and the CPU unit 26, the configuration of the module is different depending on the unit 22. For example, the module 32 could gather data from a sensor or send commands to an actuator or fan. The power supply modular unit includes power supply electronics to power the CPU unit 26 and several I/O module units 28. The CPU unit 26 would have a microprocessor chip, memory, and communication electronics. The CPU unit 26 includes an Ethernet/LAN connection that allows control and programming of the system from a workstation, as seen in FIG. 2. A module 32 for an I/O module unit 28 could vary dependent on the purpose of the particular unit. Types of I/O modular units include analog input that accepts analog input signals which are digitized and sent to the CPU unit. Analog output modular units accept commands from the CPU unit to set the analog outputs to a desired voltage value. Other modular units include relay output for controlling, via CPU commands, fans, actuators, etc.

The system 20 in FIG. 1 shows a plurality of units 24 each mounted on a rail 34, such as a DIN rail 34. In the embodiment shown, the power supply unit 24 is in the upper left hand position. The CPU unit 26 is adjacent to the power supply unit 24. A pair of I/O module units 28 are adjacent to the CPU unit 26. The lower rail has three I/O module units 28 and a base 30 without a module 32.

Each base 30 has a pair of integral power / communication and address connectors 50. One connector 50 is a male connector 50m and the other is a female connector 50f. The female connector 50f is shown at the right side of each row of units 24; the female connector 50f has a housing with ten sockets. The male connector 50m of the integral power/communication and address connector 50 is shown on the base 30 without a module 32. Each base 30 has a backplane printed circuit board (PCB) 52 which in addition to facilitating the connection of the connectors 50 has an addressing circuit as described below. The base 30 in addition has at least one field connector terminal block 54. The field terminal blocks 54 of the I/O module units connect to devices such as contactors, fans, valve actuators, thermistors for temperature measurement, etc.

The field connector terminal block 54 in the power supply is for input power connections such as 24VAC, 120VAC, or 230 VAC that are converted to appropriate system voltages. The CPU unit 26 has in addition a field connector terminal block 54 shown, a second and different set of field terminal block 54 connectors adapted to receive and connect to Ethernet, field bus connections, and USB.

Referring to FIG. 2, a block diagram of the modular I/O system 20 is shown. The diagram shows the power supply unit 24 in the leftmost position of a first row 36 of the system 20. The CPU unit 26 is located to the right and adjacent to the power supply unit 24. A series of I/O module units 28 are shown on the first row 36 with a gap between the second I/O module unit 28 and the last unit 28 to symbolize that a plurality of units could be placed between the units 28.

Each unit 22 is represented by a base 30 and a module 32. The unit 22 function or characteristic is based on the module 32 installed into the base 30. The address of each unit 22 is shown below the unit. Each of the units 22 after the gap is signified by the address n, n + 1, n + 2, etc. The addressing of the units 22 will be described in more detail below.

A second row 38 of the system 20 shown in FIG. 2 shows a plurality of I/O module units 28 and a base 30 without a module 32. The second row 38 of the units 22 is connected to the first row 36 of the units 22 by a cable 40. The cable 40 extends from the integral power / communication and address connector 50 at the end of one row 36 to the connector 50 at the beginning of the next row 38. In the embodiment the cable 40 extends from the female connector 50f of the first row 36 to the male connector 50m of the second row 38. Additional rows can be connected via row to row by cables 40.

The modular I/O system 20 in the embodiment shown has ten lead connections, in the connector 50, between bases 30. The leads incorporate a pair of power leads, a differential communications bus, five address lines, and a ground line. The address lines provide address information to each backplane PCB 52, as seen in FIGS. 1, 3, and 4, installed in the I/O system 20 and a static address for a module 32 that is plugged into the base 30. The I/O system 20 of the embodiment accommodates 2⁵ = 32 modules 32 in a system with a 10 pin connector. This number of thirty two (32) modules 32 includes the power supply unit 24 and CPU unit 26.

In a preferred embodiment, while the bases would have addresses 0 to 31, the modular I/O system 20 has an add 1 so that the IO modular unit, power supply, or CPU reads this address from the backplane 52 and adds one to it to obtain a range of 1 to 32 which is clearer for the customer rather than 0 to 31. Still referring to FIG. 2, the power supply unit 24 has an address of 1. The CPU unit 26 has an address of 2. The I/O module unit 28 adjacent to the CPU unit 26 has an address of 3 or 00011. The unit 28 has an address of 4 or 00100. The unit 28 at the end of the first row 36 has an address represented by n + 1; if there were two bases 30 represented by the dashes, the "n + 1" would represent 7 or 00111. The first unit 22 in the second row 38 would have an address represented by n + 2, which would be 8 or 01000 if the last unit on the first row 36 has an address of 7.

The unit 22 having an address of n+2 is represented as only having a base 30. The base 30 has an address regardless of whether a module 32 is connected to the base 30. When a module 32 is connected, in a preferred embodiment, the module 32 using the add 1 takes the address of n+3, which would be 9 or 01001 in the embodiment shown.

The communications bus of this I/O system 20 is differential and self-clocking (asynchronous). The modular I/O system 20 communicates with the I/O module unit 28 by sending packets of data over the communications bus. Each packet includes address information in the packet header. Every I/O module unit 28 installed on the communications bus receives the address header data of every packet, but only the addressed I/O module unit 28 will process the information and respond to the CPU module 26. Each module 32 of the I/O module unit 28 knows its address since a unique, static address is obtained by the module 32 by virtue of the base 30 into which it is installed. The modules 32 of the I/O modular units 28 that are not at the address specified in the packet header will ignore the remaining packet bytes.

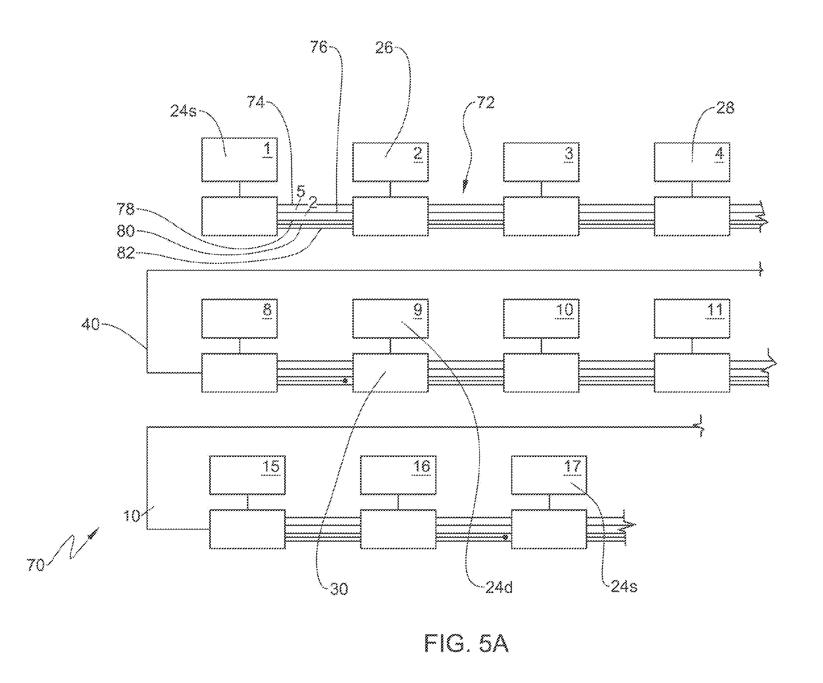

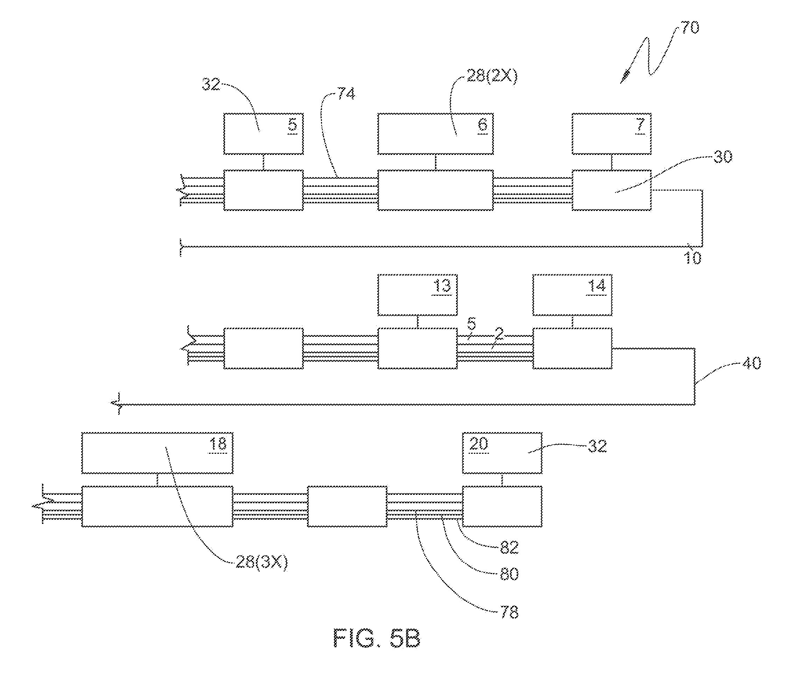

The backplane PCB 52 of the base 30 establishes a static address. In addition, the backplane PCB 52 provides power and communication to the module 32. The backplane PCB 52 also passes power and communication to the next base 30. As will be further explained with respect to FIGS. 5A and 5B, the power for the backplane PCB 52 is terminated at the next power supply unit 24.

In one embodiment, the modules 32 include a microcontroller with application software specific to the type of module 32 (e.g. relay output type, analog input or output, digital input, etc.). This microcontroller also is responsible for monitoring the incoming packets and determining if a packet is destined for that module. The backplane PCB 52 in the base 30 does not monitor the packets.

In a preferred embodiment, the I/O modular units 28 are polled by the CPU unit 26. Therefore when responding to the packet the 10 modular unit 28 does not actually need to include the CPU address in the packet. The protocol allows the CPU unit 26 to detect that it is the response from the I/O modular unit 28.

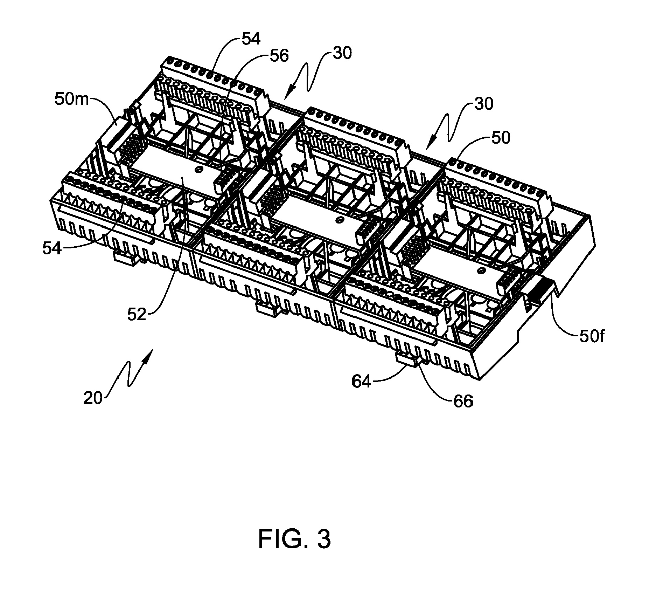

Referring to FIG. 3, a perspective view of three bases 30 of the modular I/O system 20 is shown. The bases 30 are each identical. Each base 30 has the pair of integral power / communication and address connectors 50, the male connector 50m and the female connector 50f. The backplane printed circuit board (PCB) 52 extends between the connectors 50. In addition, each base 30 has a connector 56 for interfacing with the module 32. Each base 30 in addition has a pair of field connector terminal blocks 54. The terminal blocks 54 of the I/O module unit 28 connect to customer equipment such as contactors, fans, valve actuators, thermistors for temperature measurement, etc. depending on the type of IO modular unit. These are typical building automation control items. The terminal blocks 54 are electrically isolated from the PCB 52 and the connectors 50 until the module 32 is installed.

Each base 30 has a detent mechanism 64, such as a spring latch, for connecting the base 30 to the rail 34, as seen in FIG 1. The push button 66 for the detent mechanism 64 is shown.

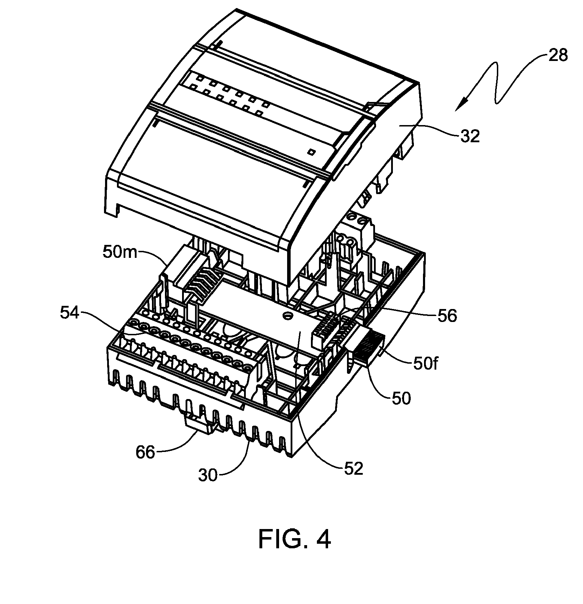

Referring to FIG. 4, an "exploded" diagram of an I/O module unit 28 is shown. The I/O module unit 28 is divided into two distinct pieces: the base 30 that is capable of installation on the DIN rail 34, as seen in FIG. 1, and the actual I/O module 32 that plugs into the base 30. As shown above with respect to FIG. 3, the base 30 includes the "backplane" printed circuit board ("PCB") 52 with an integral power/communication and address connector 50 that protrudes outside the base portion to allow multiple base portions to be mated together on the DIN rail.

The field connection terminal blocks 54 are contained in the bases 30. The connector 56 on the base 30 mates with a connector, not shown, on the module 32.

Still referring to FIG. 4, when an I/O module 32 is plugged into a base 30, connection is made to the backplane PCB 52 through the connector 56 which provides power, communication, and the address of the module 32. In addition, the module 32 is connected to the field connection terminal blocks 54. The I/O module 32 of the I/O module unit 28 then reads the address and is instantly ready for the CPU module unit 26 to "discover" it.

The CPU unit 26 of the I/O system 20 "discovers" the number and type of I/O modules 32 that are installed into the system 20 as they are plugged into bases 30. The CPU therefore knows how many I/O modules 32 at any given time are installed in the I/O system 20 as well as each I/O module's type and capabilities. The CPU module unit 26, as seen in FIGS. 1 and 2, polls all discovered I/O modules 32 during each poll period, which is a specified duration. The CPU performs a discovery sequence (once every specified number of poll periods) at a periodic rate to discover newly installed I/O modules 32; this process is called "auto-commissioning." Once discovered, the CPU "auto-commissions" discovered I/O modules 32 are capable of being exposed to the user at a workstation 58 as seen in FIG. 2. The user may then use the resources of the commissioned I/O modules 32.

In one embodiment, upon an I/O module's 32 discovery, the CPU unit 26 automatically configures the I/O channels specific to the type of module 32 to a default configuration or a custom configuration programmed into the CPU unit 26 for a particular module 32 type. Configuring the I/O channel types depends on the type of channel. For example an analog output can be configured to be a voltage or current output. The default output type may configure the analog output channel to a voltage output type. The advantage to this method is that the user at the workstation 58, when viewing the properties of the I/O module 32, has all channels created and configured and ready for use with no user intervention. The user would manually need to change the channel type if for example the user wanted current output in the analog output example. Even so the step of creating the channel has been completed for the user and only the type needs modification. Prior systems would expose the I/O module 32 to the user at the workstation after manual I/O module 32 discovery and require the user to perform many manual steps for each channel (some I/O modules 32 have 16 or more channels) to create a channel for that module 32 and assign a channel type before it could be used in the system. The CPU unit 26 includes default channel configurations for each module type and the user can create custom configurations for module types if the default configurations are not suitable.

Replacement of a defective I/O module 32 in a fully operational I/O system 20 simply means unplugging the defective I/O module 32 from its base 30, which is intended to stay permanently mounted to the DIN rail 34, as seen in FIG. 1, and permanently connected to its loads, such as sensors and controllers, via the field terminal blocks 54, and plugging in a new I/O module 32 of the same type. Since the backplane PCB 52 stays with the base 30, and is still connected to its neighboring left and right bases 30, power, communication, and address are not interrupted to the other I/O modules 32 in the I/O system 20. The new I/O module 32 is then auto-commissioned as described above.

Referring to FIGS. 5A and 5B, a block diagram of an alternative embodiment of the modular I/O system 70 is shown. In the embodiment shown in FIG. 2, only one power supply unit 24 is used. In contrast, the embodiment shown in FIGS. 5A and 5B shows three rows of units 22 and three power supply units 24. In the three rows of units 22, there is a single CPU unit 26 and a plurality of I/ O modular units 28. The power supply unit 24 in the first and third row are "smart" power supply units 24s. The power supply unit 24 in the second row is a "dumb" power supply unit 24d. The "dumb" power supply unit 24d does not use its address. However the supply unit 24d does have an address for consistency sake. The "smart" power supply unit 24s, such as an uninterruptible power supply (UPS) module, includes a microcontroller and responds to the CPU unit 26.

Still referring to FIGS. 5A and 5B, while all the bases 30 in a row would be in engagement with each other, the bases 30 are spaced and a plurality of lines 72 are shown to represent the connection. The top line 74 represents the five address lines, the next line 76 represents the two communication lines, and the third line 78 represents the ground line. The bottom two lines 80 and 82 are the power lines.

The I/O module unit 28 can use varying amounts of power depending on the type of I/O module 32 and what sensors or controls are connected. In order to allow the system 70 to have more I/O module units 28 than can be powered by one power supply unit 24, the system 70 shown has three power supply units 24. As indicated above, the power for the backplane PCB 52 is terminated at the next power supply unit 24.

In one embodiment, each power supply unit 24 does not have a pin in the male connector 50m, on the left side, to engage the female connector 50f on the adjacent base 30 for powering the module 32. The power line 80 is shown with a break adjacent to the power supply units 24 to represent the interruption. The power line 82, which powers the backplane PCB 52 in the base 30 runs continuously. Therefore, if the module 32 of the power supply unit 24 is not connected or the power supply unit 24 is not working properly, the I/O module 32 from the non-functioning power supply unit 24 to the next power supply unit 24 are not powered; the bases 30 continue to receive power from other power supply units 24.

Still referring to FIG. 5B, a 2x size module 32 is shown in the first row. A 3X size module 32 is shown in the third row.

In an alternative embodiment, the base 30 of the power supply unit 24 is not missing any pins in the male backplane connector 50m to prevent accepting power from the units 22 to its left. In this embodiment, the backplane PCB 52 in the base 30 the power supply unit 24 has an interruption or break in the circuitry that prevents power from power supply unit 24 to the left from reaching the modules 32 to the right of the power supply; as in the other embodiment, the bases 30 continue to receive power from all operating power supply units 24.

While the principles of the invention have been described herein, it is to be understood by those skilled in the art that this description is made only by way of example and not as a limitation as to the scope of the invention. Other embodiments are contemplated within the scope of the present invention in addition to the exemplary embodiments shown and described herein. Modifications and substitutions by one of ordinary skill in the art are considered to be within the scope of the present invention.

## Claims

1. A modular input / output apparatus, the apparatus comprising:
a power supply unit having at least one base connector;
a CPU unit having a pair of base connectors, the CPU connected to the power supply unit; and
at least a pair of input / output units, each input / output unit having a base and at least one of the input / output unit has an input / output module;
the base including:
a backplane printed circuit board having an input / output module interface;
an addressing circuit carried by the printed circuit board for incrementing the addresses;
a pair of connectors connected to the printed circuit board and for connecting to other units; and
at least one field connection terminal block for connecting to
external sensors and controls;
the input / output module including:
a circuit for interfacing with external sensors and controls and the CPU unit; and
an interface for engaging the input / output module interface on the base,
wherein the modular input / output apparatus allows installation and removal of the input / output module of one of the input / output units without effecting other input / output units.

2. An apparatus of claim 1 wherein the power supply unit and the CPU unit each have a base and a module, the backplane printed board of the base for the CPU unit and the input / output units are configured identically.

3. An apparatus of claim 1 wherein the connectors have a plurality of leads including a pair of power leads, a pair of differential communications bus leads, and a plurality of address leads.

4. An apparatus of claim 3 wherein one of the power leads powers the backplane printed circuit board on the base and the other of the power leads powers the circuit on the module.

5. An apparatus of claim 4 wherein the at least one power supply unit is at least a pair of power supply units and the power lead for powering the backplane printed circuit board extends continuously and the power lead for powering the modules terminates at the adjoining power supply unit.

6. An apparatus of claim 5 wherein the termination of the power lead for powering the modules terminates at the base connector of the adjoining power supply unit.

7. An apparatus of claim 5 wherein the termination of the power lead for powering the modules terminates on the printed circuit board of the adjoining power supply unit.

8. An apparatus of claim 1 wherein the base has a channel configured to be accepted by a rail, the base having a detent mechanism for engaging the rail for securing the base to the rail.

9. An apparatus of claim 1 wherein the addressing circuit includes an adder circuit.

10. An apparatus of claim 1 wherein the addressing circuitry includes a 5 bit adder circuit.

11. An apparatus of claim 1 wherein the at least one field connection terminal block is electrically connected to the backplane printed circuit board through the circuit on the input / output module for interfacing with external sensors and controls and the CPU unit.

12. An input / output unit comprising:
a base including:
a backplane printed circuit board having an input / output module interface,
an addressing circuit carried by the printed circuit board for incrementing the addresses;
a pair of connectors connected to the printed circuit board and for connecting to other units, and
at least one field connection terminal block for connecting to external sensors and controls;
an input / output module including:
a circuit for interfacing with external sensors and controls and the CPU unit; and
an interface for engaging the input / output module interface on the base, wherein the modular input / output system allows installation and removal of input / output module units of one of the input / output units without effecting other input / output units.

13. A unit of claim 12 wherein the base has a channel configured to be accepted by a rail, the base having a detent mechanism for engaging the rail for securing the base to the rail.

14. A unit of claim 12 wherein the connectors have a plurality of leads including a pair of power leads, a pair of differential communications bus leads, and a plurality of address leads.

15. A unit of claim 14 wherein one of the power leads powers the backplane printed circuit board on the base and the other of the power leads powers the circuit on the module.
